(19) Europäisches Patentamt
European Patent Office
Office européen des brevets

(11) **EP 3 151 036 B1**

(12) **EUROPEAN PATENT SPECIFICATION**

(45) Date of publication and mention
of the grant of the patent:
**12.06.2019 Bulletin 2019/24**

(51) Int Cl.:
*G01S 17/02* *(2006.01)*      *G01S 7/486* *(2006.01)*
*G01S 7/497* *(2006.01)*

(21) Application number: **16191699.4**

(22) Date of filing: **30.09.2016**

(54) **OPTOELECTRONIC SENSOR AND METHOD FOR PROCESSING AN ELECTRICAL SIGNAL**

OPTOELEKTRONISCHER SENSOR UND VERFAHREN ZUR SIGNALBEARBEITUNG

SENSOR OPTOÉLECTRONIQUE ET PROCÉDÉ DE TRAITEMENT DE SIGNAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.10.2015 IT UB20154101**

(43) Date of publication of application:
**05.04.2017 Bulletin 2017/14**

(73) Proprietor: **Datalogic IP TECH S.r.l.**
**40012 Lippo di Calderara di Reno (BO) (IT)**

(72) Inventors:
• **TOSATO, Paolo**
  **I-40069 Zola Predosa (BO) (IT)**
• **MESTIERI, Marco**
  **I-44042 Cento (FE) (IT)**

(74) Representative: **Porta, Checcacci & Associati S.p.A**
**Via Vittoria Colonna, 4**
**20149 Milano (IT)**

(56) References cited:
**US-A- 5 225 689**      **US-A- 5 491 548**
**US-A1- 2013 015 977**

**Description**

Technical field

The present invention relates to an optoelectronic sensor and a method for processing an electrical signal, said signal being present in a receiver and corresponding to the emission of electromagnetic radiation by an emitter of an optoelectronic sensor.

Technology background

Optoelectronic sensors referred to as asynchronous are sensors that include two parts spatially separated from each other, that is, positioned at two distinct points of space separated by a distance d, the two parts including an emitter and a receiver. These optoelectronic sensors are generally used to detect objects that are interposed between the emitter and receiver: the emitter emits electromagnetic radiation, usually in the form of one or more pulses, that is received by the receiver if no object interrupts the transmission of radiation between emitter and receiver; if an object interrupts the transmission, the receiver does not receive the pulse, making it possible to detect the object.

These sensors are defined as asynchronous because the emitter and transmitter are completely separated one from the other and there is no connection between them. Therefore, the receiver inevitably needs to have information relating to the instant in time at which the emission of pulses from the emitter takes place so as to properly receive the same pulses and to distinguish them from the noise or interference that is present. This takes place via a procedure known throughout the industry as "synchronization"" between emitter and receiver. Each time that an object is detected by the sensor, the process of synchronization is repeated.

The sensors of this type are generally used over a wide range of distances, meaning that they are utilized by positioning the receiver and emitter at a distance of several centimeters as well as some tens of meters from each other. However, when the distance between the emitter and the receiver is particularly reduced, the sensitivity of the sensor is reduced, so that objects of greater dimensions than those that are detectable at greater distances can be detected. The fact that objects of greater dimensions can be detected depends on the fact that it turns out to be necessary to receive an increased amount of electromagnetic radiation emitted by the emitter so that the receiver recognizes the object, or, for the same reason, it becomes difficult to detect semitransparent material. Moreover, this is due to the fact that a "false positive" detection is possible as a result of signals caused by the reflection of electromagnetic radiation on other objects present in the field of view. Another potential negative aspect is that the sensor is less immune to signals that arrive from other sources of electromagnetic radiation present in the zone where the signal is detected.

In order to address this problem, the usual recommendation is an amplification stage inside the receiver that is arranged for receiving an electrical signal generated by the reception of electromagnetic radiation that has variable gain. This gain is regulated by the user who selects the working distance (that is, distance between the emitter and the receiver), for example, through a regulation element that accordingly determines the gain of the stage of amplification. In any case, however, it is not possible to obtain a gain equal to zero, that is, in most cases a minimum gain is always present because, for example, there are gain resistors that cannot be regulated to a value equal to zero. In addition, low amounts of gain introduce a lot of noise within the circuit even when they are not in use, while also reducing the possible bandwidth of the amplification stage. Therefore, there is a minimum gain that connects the minimum distance.

In synchronous sensors, that is, in sensors in which the emitter and receiver are electrically connected, the problem can be resolved by adjusting the width of the emission of the pulse from the emitter, meaning that it is possible to reduce the maximum amplitude of the pulse sent at small distances. This is not possible in the case of asynchronous sensors because there is no communication between the emitter and the receiver when the latter cannot determine the distance d at which the former is positioned. Implementing communication of this data between the emitter and receiver is not a viable solution in optoelectronic sensors typically used in industrial plants, since it would substantially increase their cost and price them out of the reference market.

US5225689 discloses a reflected light sensor having a light transmitter including at least two mutually independent light sources and a light receiver including at least two separately evaluatable photosensitive elements. A switching point or distance limit of the light sensor can be continuously varied within a defined sensing range by inversely and continuously controlling currents of the light sources in accordance with a control voltage USt,LED, or by continuously varying a first and a second independent control voltage thereby controlling gains of signals at the output of the photosensitive elements. US5491548 relates to a wide dynamic range optical receiver which has low and high sensitivity signal channels for converting first and second portions of an optical input signal into voltage values representative of the various portions of the optical input signal. The voltage signals are converted into digital values by a converting means and a reconstruction is performed in a combining means to produce a digital output representative of the optical input signal. The wide dynamic range optical receiver may be used in an optical signal measurement instrument, such as an optical time domain reflectometer, where the optical return signal from a fiber under test is coupled to the wide dynamic range optical receiver in first and second portions with the first portion having an optical power level substantially less than the second portion.

US8842015 discloses a lidar where pulses are emitted with alternate high and low power for avoiding saturation due to close targets. The sensitivity of the detector can be varied changing the gain or the threshold in the receiver.

## Summary of the invention

The present invention is arranged for providing an optoelectronic sensor and a method of operation of such sensor arranged for resolving at least in part the problems listed with reference to the known art cited.

The scope of the invention is defined in the appended claims. Any reference to "embodiment(s)", "example(s)" or "aspect (s) of the invention" in this description not falling under the scope of the claims should be interpreted as illustrative example(s) for understanding the invention.

Preferably, the sensor and method of the invention make it possible to work at limited distances between the emitter and the receiver without an excessive reduction of the sensor's sensitivity. The dynamic of the amplification stage, that is, the ratio of the maximum gain and the minimum gain thereof, is expanded without making the production of the stage itself more complex or noisier.

According to a first aspect, the invention relates to an optoelectronic sensor including:

- a receiver arranged for receiving electromagnetic radiation, the receiver comprising a photodetector arranged for transforming the electromagnetic radiation received into a received electrical signal and an amplification stage having variable gain between a minimum gain and a maximum gain arranged for amplifying said electrical signal received;
- an emitter arranged for emitting a periodic electromagnetic radiation including a pulse train in each period, each pulse train including n pulses, where $n \geq 2$, and wherein each jth pulse with $j = 1,....,n$ of the train having an amplitude equal to:

$$A_j = A_{j-1}*B$$

where B is an integer greater than 0 with $B \leq D$ where D = (maximum gain of the amplification stage/minimum gain of the amplification stage);
- a regulation element configured for the regulation of the gain of the amplification stage of the receiver having a regulation range subdivided into a number n of consecutive zones equal to the number n of pulses in the pulse train emitted by the emitter, the first zone related to the distances between emitter and receiver starting from a minimum distance possible for using the optoelectronic sensor, and the n-th zone related to distances between emitter and receiver terminating with a maximum distance possible for using the optoelectronic sensor; said gain of said amplification stage being chosen by selecting a point in the zone of said regulation range of the regulation element; said regulation range being produced in such a way that in each zone $j \neq n$ of the regulation range, moving a point selected within said regulation element inside the j-th zone in the direction from the starting point adjacent to the (j-1)th zone toward the endpoint adjacent to the zone (j+1)th, the corresponding gain set up in the amplification stage is moved from the minimum gain that can be set up in the amplification stage to the minimum gain that can be set up in the amplification stage multiplied by the integer B, equal to the ratio of the amplitude between two consecutive pulses in the same pulse train.

The optoelectronic sensor of the invention is any type of optoelectronic sensor arranged for detecting objects, in other words, for determining the presence or absence of an object in a given zone.

Preferably, the optoelectronic sensor of the present invention is an asynchronous sensor, that is, a sensor in which emitter and receiver are not electronically connected to each other.

The sensor includes an emitter and a receiver, separated by a distance d, referred to as the working distance, that determines the type of amplification that must be performed on the signal received by the receiver.

The emitter can be of any type, for example including a solid state (non coherent emission) polychromatic device. Alternatively, it can include a laser. Preferably, the emitter includes an LED (Light Emitting Diode), for example, with emission in the visible, infrared or ultraviolet range. The emitter is arranged for emitting a periodic pulsed electromagnetic radiation. A periodic pulsed radiation in the present context means that the emitted electromagnetic radiation has period T and in this period T the radiation has an amplitude other than zero for a time $T_{on}$ and equal to zero for a time $T_{off}$, in which $T_{on} + T_{off} = T$. Preferably, $T_{off} > T_{on}$, more preferably $T_{off} >> T_{on}$. Advantageously $10 < T_{off}/T_{on} < 100$. In the sensor according to the present invention in the period $T_{on}$, the emitter does not emit a single pulse, but instead of n pulse train with $n \geq 2$. The pulses of the same train are separated by a time interval that is preferably the same for all n pulses; it is equal, for example, to $T_{sep}$. Furthermore, the duration of each pulse $T_{imp}$ is preferably the same inside the same pulse train; therefore, the time interval $T_{on}$ of the pulse train may be written as

$$T_{on}=n^*T_{imp}+(n-1)^*T_{sep}$$

and the total period of the pulse train emitted by the emitter is equal to

$$T=T_{on}+T_{off}= n^*T_{imp}+(n-1)^*T_{sep}+T_{off}.$$

According to the invention, the n pulses belonging to the same train have a variable amplitude. The first pulse emitted in the time sequence is the pulse having a minimum amplitude, while the last pulse emitted is the pulse having the maximum amplitude. The amplitude ratio between two adjacent pulses in the time sequence is constant for all the pulses, that is, for each jth pulse with j = 1,....,n of the train, its amplitude $A_j$ is equal to:

$$A_j = A_{j-1}^*B$$

where B is a positive integer greater than 0.
The first pulse j=1 has an amplitude equal to

$$A_1 = \frac{A_{max}}{B^n}$$

where $A_{max}$ is the maximum amplitude of the last nth pulse of the pulse train.
The receiver preferably comprises a photodetector such as a photodiode or photoresistor, devices sensitive to a frequency spectrum that is very broad. The receiver is capable of transforming electromagnetic radiation into an electrical signal. Therefore, the received electromagnetic radiation, when it is detected, is transformed into an electrical signal that is then appropriately processed as indicated below. In other words, a photodetector converts a light signal into an electrical signal, usually in current then converted by a receiver circuit into a voltage. There are photodetectors that utilize various physical principles. Preferably, a photodiode is used. The receiver further comprises an amplification stage, preferably an analog amplification stage, that amplifies the electrical signal originating from the photodetector. The amplification stage is a variable gain amplification stage, and the gain G of the amplifier can be selected equal to a point within the continuous interval ranging from a minimum gain value $G_{min}$ to a maximum gain value $G_{max}$ or equal to one of M different discrete values ranging from a minimum gain value $G_{min}$ to a maximum gain value $G_{max}$. The ratio of the maximum gain value and the minimum one is called dynamic D of the amplification stage

$$D = \frac{G_{max}}{G_{min}}$$

Preferably, $G_{max}$ ranges between 20 and 40 MΩ, while $G_{min}$ ranges between 20 and 40 kΩ.
The variable gain is obtained according to the type of amplification stage. For example, in the case of operational amplification stages, it can be obtained via a plurality of alternatively selectable resistors. The greater the number of points M, the greater generally is the complexity of the operational stage.
The value B, which is equal to the ratio of two pulses within the same train that are adjacent in the time sequence, must conform to the condition B ≤ D.
The value of the gain G is fixed equal to one of the available values via a regulation element, for example, a trimmer. Nevertheless, any regulation element is possible, which is arranged for regulating the gain G of the amplification stage and for selecting one of the M possible values The element can be controlled by a user or else automatically. Usually, the regulation element brings into the regulation a plurality of values for the sensor sensitivity, from a minimum sensitivity to a maximum sensitivity. The sensitivity value may correspond, for example, to a distance value, meaning that selecting a sensitivity in certain applications is equivalent to selecting the distance d between the possible distances at which the emitter can be positioned with respect to the receiver, from a minimum distance $d_{min}$ to a maximum distance $d_{max}$. In the known sensors with variable gain amplification, the greater the distance, the greater generally is the gain, and, analogously, the less the distance, the lower is the gain. Therefore, at "short" distances, the set gain is "small," with the problems brought in related to modest gains existing in the art. The present invention, in order to increase the number of points available in the dynamic without making the amplification stage excessively complex, and at the same time thus having a relatively high sensitivity even at short distances, exploits the fact of having available an emission signal including a n pulse train with variable amplitude, from a minimum amplitude $A_1 = A_{n=max}/B^n$ to maximum amplitude $A_{n=max}$.

According to the present invention, the regulation range of the regulation element is subdivided into a number n of consecutive zones equal to the number n of pulses in the pulse train emitted by the emitter. The n zones are zones corresponding to the ranges of distances of the same number at which emitter and receiver are positioned. By convention, the first zone is defined as that portion of regulation range related to distances between emitter and receiver starting from the minimum possible distance $d_{min}$ of use of the optoelectronic sensor to an intermediate distance $d_{1intermediate}$ and the last zone or nth zone is the portion of the regulation range related to distances between emitter and receiver starting from a distance $d_{(n-1)intermediate}$ and terminating with the maximum possible distance of use $d_{max}$ of the optoelectronic sensor. The generic zone j is therefore related to a distance between $d_{(j-1)intermediate}$ and $d_{jintermediate}$ between emitter and receiver in which $d_{min}$... $d_j$... $d_{max}$ is a monotonically increasing function. Therefore, a point belonging to the first, second,...jth..., nth zone is, for example, selected by the user (or automatically) according to the value of the distance at which the emitter and receiver were positioned.

Each of these zones corresponds to a gain range for the amplification stage of the regulation element. According to the present invention, in each of these zones, when a point is selected within them, the corresponding gain is selected as follows: selecting a point in a jth zone of said regulation range of the regulation element, the corresponding gain selected in the regulation stage is, for each $j \neq n$ zone of the regulation range, a value ranging between the minimum gain $G_{min}$ that can be set in the amplification stage (value obtainable when the starting point of the jth zone adjacent to the (j-1)th is selected) and the minimum gain that can be set in the amplification stage multiplied by the whole number B equal to the amplitude ratio between two consecutive pulses (value obtainable when the endpoint of the jth zone adjacent to the (j+1)th zone is selected). The gain that can be set in the amplification stage by a shift between the starting point of the jth zone and the endpoint of the jth zone is a monotonically increasing function, that is, selecting different points shifting between the starting point and the end point of the same zone, the gain of the stage increases between $G_{min}$ and $G_{min}*B$. Note that shifting in contiguous zones, that is shifting from the jth zone to the (j+1)th zone, the selected gain has an abrupt drop from $G_{min}*B$ to $G_{min}$ in the point of contact between the jth zone and the (j+1)th. In the last zone - that is, the nth zone - the gain is variable from a value ranging between the minimum gain $G_{min}$ that can be set in the amplification stage (value obtainable when the starting point of the nth zone adjacent to the (n-1)th zone is selected) and the maximum gain $G_{max}$ that can be set in the amplification stage (value obtainable when the endpoint of the nth zone is selected).

Therefore, a regulation range of the regulation element according to the present invention - a range that in the known art is generally subdivided in a monotonically increasing way from a point that sets the minimum distance $d_{min}$ between emitter and receiver corresponding to the minimum gain $G_{min}$ of the amplification stage to a point that sets the maximum distance $d_{max}$ between emitter and receiver corresponding to the maximum gain $G_{max}$ of the amplification stage - is subdivided into zones and associated with the gain of the amplification stage in such a way that in the transition from one zone to the other there is a "jump" in the gain of the amplification stage equal to B.

Nevertheless, this loss of gain is compensated by the fact of having n pulses with different amplitudes, each two consecutive pulses being spaced apart by the same difference B, equal to the ratio of the loss of gain between one zone and the next. Therefore, for each selected zone of the regulation range, it is possible to select - using an appropriate logic, for example - the corresponding pulse among the n of the train having the same number of the zone in which the point that determines the gain of the amplification stage is selected; for example, the jth pulse is associated with a point in the jth zone. This jth pulse becomes the "relevant" reception pulse. In this way, the sensitivity of the sensor can be modulated without "discontinuity," a discontinuity that could simply be perceived as shifting the selection of the point in the regulation range from one zone to an adjacent one, implying a jump in gain by the factor B between one zone and the other. In other words, thanks to this configuration of the sensor in which an emission of n pulses is present, in which two consecutive pulses have an amplitude ratio equal to B, and a gain regulation range divided into n zones with a gain jump equal to B between the gain at the ends of two adjacent zones of the regulation range that are in contact, it is possible to keep the sensitivity of the optoelectronic sensor essentially constant, simply by varying the pulse of the train that is considered for the detection.

For example, if the point of the regulation range selected in the regulation element belongs with the jth zone, the determining pulse for the detection or not of an object between sensor and emitter is the jth pulse. If it shifts within the zone j-1, for example, because the distance between emitter and detector is varied, the determining pulse becomes j-1 pulse even though, passing between the jth zone and the (j-1)th zone, the gain is increased by a factor B, the determining pulse has an amplitude reduced by the same factor B and the sensitivity therefore remains the same.

Not all of the pulses have the same importance according to the invention. The term "determining" means that the pulse that must be detected to have a correct detection changes depending on the zone. For example, with the architecture of the sensor according to the invention, it is possible to establish that the determining pulse, the zone j having been selected, is the jth pulse. Only the jth pulse in the train, or the pulses from j to n, determine the detection of the pulse. In other words, selecting the zone j of the regulation range, the important pulse is the pulse j, or in one variant the pulses from j to n. A received and amplified signal corresponding to this pulse must be detected by the receiver in such a way as to have correct detection. For the pulses having a value less than j, that is, the pulses i with i < j, a detection of them in order to establish whether or not an object is present between receiver and emitter is not indispensable. Therefore, a configuration of the sensor according to the invention makes it possible to carry out detections in the same way for whichever zone is selected; simply according to the zone selected, the pulse that is taken for reference changes.

In this way, the sensitivity of the sensor is varied determining the particular pulse, essentially from which particular signal amplitude, the detection must have a positive (or negative) result for the correct detection. Therefore, no discontinuity in the regulation is present because, by varying the selected zone from the jth zone to the (j-1)th zone, the considered signal has an amplitude B times less, equal to the increase in the gain and therefore the variation appears as substantially continuous for the user.

Essentially, this sensor enables a fictitious "variation" of the emission amplitude without actually carrying out this variation - the sensor being one in which emitter and detector are separate from each other - and therefore a regulation of the intensity of the emitter is not possible. The "detecting" pulse that is being considered is always the one being modified. It essentially allows an expansion of the dynamic of the sensor inasmuch as in each zone of the regulation range the entire dynamic, or part thereof (depending on the value of B) can be utilized.

Advantageously, the optoelectronic sensor includes a logic unit arranged for processing said signal, which is received and amplified in an independent manner from the selected zone within the gain range of the regulation element. In the object detection operation, this logic unit takes account of exactly which zone was selected by the regulation element, for example the jth zone, in such a way that the pulse of the pulse train is consequently identified as fundamental for the detection; that is, the pulse must be detected in such a way as to obtain a correct detection. In fact, according to the invention, not all of the pulses need to be detected in order to have a correct detection, as previously mentioned, and the ones "not to be detected" depend on the zone that is selected.

More preferably, said logic unit is configured to establish the positive detection of the pulse emitted by the emitter if - the jth zone of the regulation range being selected - a signal corresponding to said jth pulse is correctly received. The jth pulse is associated with the jth zone. Preferably, a point in the jth zone and therefore the corresponding gain of the amplification stage being selected, the determining pulse for establishing whether or not the pulse train was received by the receiver is the jth pulse. The other pulses are not determining factors and do not change this valuation, in particular the pulses with i < j. The meaning of "correctly received" depends on the logic set in the sensor.

Preferably, the optoelectronic sensor includes a sampling unit arranged for sampling an amplitude of said received electric signal and amplified at n points spaced apart in time sequence by the same distance present between said n pulses so as to obtain n sampling values $S_1....S_n$. The sampling unit is preferably included in the receiver. The receiver, in order to detect the presence or absence of objects between receiver and emitter, detects the electromagnetic radiation corresponding to the emission when the luminous radiation from the inventor is emitted and, based on an analysis of the resulting electrical signal generated, is able to establish whether or not an object is present. In a light barrier, for example, the absence of reception from the receiver of a pulse emitted by the emitter may signify the presence of an object. Therefore, the receiver preferably samples the received and amplified signal, detecting n points at the same distance of the time sequence $T_{sep}$ that is present between the n pulses of the radiation emitted by the emitter. Nevertheless, it is not being said that these pulses correspond to received signals and amplified at the emission of the n pulses. If, for example, the first pulse, the lowest one in intensity, generates a signal detected as "too low," that is, the receiver is not capable of receiving it because of the intrinsic sensitivity or the noise, the n sampled points are for the first n-1 values from $S_1$ to $S_{(n-1)}$ effectively corresponding to n-1 radiation pulses, that is, from pulse 2 to pulse n-1, but the last nth sampling $S_n$ is the sampling of a received and amplified signal, which is essentially a noise signal. These n samples are preferably utilized, for example, at the logic unit, to establish whether or not an object is present between receiver and emitter. Each sampling value $S_i$ represents the maximum of the signal in a sampling interval, for example, the maximum determined via a peak detector.

More preferably, the optoelectronic sensor, and even more preferably the receiver, includes a first downstream comparator of said sampling unit, said first comparator being arranged for comparing said n sampling values to a detection threshold. A detection threshold is preferably utilized to establish whether or not a certain received signal, in this case the sampling values, is indicative of the presence of an object. In general it is established that a signal is correctly received or "positively received," that is, it is a received signal representative of an emitted pulse, if it exceeds a detection threshold.

Even more preferably, the optoelectronic sensor, or the receiver of the sensor, includes a logic unit configured for establishing whether or not said n sampling values are indicative of an object being present between the receiver and the emitter based on said comparison with said detection threshold and based on the selected zone among the n of the regulation range of the regulation element. The comparison between the sampled values and the threshold is the determining factor for establishing whether or not the detection is established. Nevertheless, in the invention also the j value of the jth zone in which the gain of the amplifier was selected. Preferably in fact, given the value of j, only the received signal corresponding to the jth pulse is important, in other words, only the comparison of the received and sampled signal corresponding to the jth signal is the determining factor for establishing whether or not these pulses were received. Nevertheless, this does not correspond to comparing only the sampling value $S_j$ or the sampling values from $S_j$ to $S_n$ with the detection threshold, because as seen the sampling values do not always correspond to the emission pulses (the sampling value $S_1$ could correspond to the third pulse if a signal corresponding to the first two pulses was not detected). Therefore, if the jth zone was selected, preferably at least a number of sampling values n-(j-1) preferably must exceed the detection threshold in order to establish that a detection of the jth pulse was carried out.

Preferably, the optoelectronic sensor, more preferably the receiver, comprises a second upstream comparator of said sampling unit, said second comparator being arranged for comparing a received and amplified signal with an activation threshold less than said detection threshold, and arranged for activating the sampling unit for sampling an amplitude of said received and amplified electrical signal at n points if said received and amplified signal exceeds said activation threshold. The optoelectronic sensor comprises a receiver and an emitter that are separated from each other. Therefore, the receiver does not know when the emitter emits the pulse train. Therefore, it is not advantageous to continue to sample the continuously received signal, also because it would be a risk not to ever sample at the correct instant the received signal corresponding to the pulse train. The sampling preferably starts when the received and amplified signal exceeds an activation threshold, which means that the received and amplified signal is "strong enough" and the sampling unit is therefore activated solely when the received and amplified signal has exceeded this activation threshold.

Advantageously, the number of pulses of the pulse train is equal to n = 2. The sensor of the present invention obtains the advantages described above with just two different amplitude signals emitted as a pulse train.

Preferably, the optoelectronic sensor, more preferably the receiver, comprises a peak detector downstream from said amplification stage and upstream from said sampling unit, said peak detector arranged for maintaining for an interval of time a maximum value of said received and amplified electrical signal to be sampled. Advantageously, the peak detector is utilized so that the sampling values correspond to the maximum amplitude values of the signal received and amplified at the sampling intervals.

In a preferred example, said emitter and said receiver are spatially separated at a distance d.

Preferably, said regulation element is realized in such a way that the nth zone of said regulation range of said regulation element, moving the point selected in said regulation element inside the nth zone in the direction from the starting point adjacent to the (n-1)th zone toward the endpoint, the corresponding gain set in the amplification stage is shifted from the minimum gain that can be set in the amplification stage (6) to the maximum gain that can be set in the amplification stage.

In a second aspect, the invention is related to a method of processing an electrical function of an electromagnetic radiation emitted by an emitter of an optoelectronic sensor realized in accordance with the first aspect, said method including:

- selecting a point in the jth zone of the regulation range in the regulation element in such a way as to determine the gain of said amplification stage;
- emitting said pulse train from said emitter;
- receiving an electromagnetic radiation from said receiver during the emission of said pulse train;
- generating an electrical signal as a function of said received radiation and amplify the electrical signal; and
- establishing whether or not said received amplified signal is indicative of a presence of an object between the receiver and emitter based on an amplitude of said received signal in at least one point and on the basis of the value j of the jth zone selected between the n of the regulation range of the regulation element.

As described in relation to the first aspect, the possible reception of the pulse train emitted by the emitter determines whether or not an object is present between emitter and receiver. Via the regulation element, a point within the regulation range that is located in the jth zone is selected. Said point is preferably selected on the basis of the distance at which emitter and receiver are positioned. This point also determines the gain of the amplification stage in the receiver. Once a signal is received, it is determined whether or not this received signal is indicative of the presence of an object between emitter and receiver based both on the value of j and based on the amplitude value at a point of the received signal.

Preferably, the output of the entire sensor is not "object detected" or "no object" after merely a single positive detection. Preferably, P (with P being an integer) congruent detections are necessary for emitting an object detected output signal.

Preferably, the step of establishing whether or not said received amplified signal is indicative of an the presence of an object between the receiver and the emitter includes:

- establishing a detection threshold value;
- if said detection threshold is exceeded by an amplitude at a point of the received amplified signal corresponding to the emission of the jth pulse of the pulse train, establishing that no objects are present between receiver and emitter if all the amplitude values of the received and amplified signal corresponding to the emissions of the pulses i=j.....n of the pulse train also exceed the detection threshold.

When the jth zone is selected, the determining pulse for the correct detection is preferably the jth pulse. Generally, in order to evaluate whether or not a detection of a pulse is made, a detection threshold is established, and it is determined whether the received signal corresponding to the pulse emission is greater than or less than the detection threshold. If it is greater, it is established that the pulse was detected; if less, it was not (and, therefore, an object probably may have interrupted the transmission of the pulse between receiver and emitter). In the present invention, it is not necessary for all of the received signals corresponding to the n pulses of the train to exceed the detection threshold, but for the received signal corresponding to the jth pulse to do so.

Advantageously, the method of the invention, subsequently to the step of receiving an electromagnetic radiation and before the step of establishing whether or not the received and amplified signal is indicative of the presence of an object, comprises the steps of:

- sampling an amplitude of said received and amplified electrical signal at n points spaced apart in time sequence by the distance present between said n pulses so as to obtain n sampling values $S_1$....$S_n$; and
- comparing said n sampling values to a detection threshold.

The receiver, in order to detect the presence or absence of objects between receiver and emitter, detects the electromagnetic radiation corresponding to the emission when the luminous radiation from the inventor is emitted and - based on an analysis of the same, or better, of the resulting electrical signal generated - is able to establish whether or not an object is present. Therefore, the receiver preferably samples the received and amplified signal, detecting n points in the signal at the same distance of the time sequence $T_{sep}$ that is present between the n pulses of the radiation emitted by the emitter. Nevertheless, it is not being said that these pulses correspond to received signals and amplified at the emission of the n pulses. If, for example, the first pulse, the lowest one in intensity, generates a signal detected as "too low," that is, the receiver is not capable of receiving it because of the intrinsic sensitivity or the noise, the n sampled points are for the first n-1 values from $S_1$ to $S_{(n-1)}$ effectively corresponding to n-1 radiation pulses, that is, from pulse 2 to pulse n-1, but the last nth sampling $S_n$ is the sampling of a received and amplified signal, which is essentially a noise signal. These n samples are utilized to establish whether or not an object is present between receiver and emitter. Each sampling value $S_i$ represents the maximum of the signal in a sampling interval, for example, the maximum determined via a peak detector.

Preferably, the step of establishing whether or not said received amplified signal is indicative of a presence or absence of an object between the receiver and the emitter comprises the step of establishing whether or not said received amplified signal is indicative of a presence of an object between the receiver and the emitter based on said comparison to the detection threshold and based on the value of j in the jth zone selected from among the n of the regulation range of the regulation element. Establishing whether or not said received amplified signal is indicative of a presence of an object between the receiver and the emitter does not depend solely on the result of the comparison. This also preferably depends on the value j of the selected zone. In fact, depending on the zone, the same results of the comparison can lead to establishing a detection or a non-detection. The determining factor remains the value of the comparison of a signal corresponding to the jth pulse.

Preferably, the method according to the invention comprises the step of:
- initiating the step of sampling said received amplified signal at n points when said received amplified signal exceeds an activation threshold lower than said detection threshold.

In order not to continuously sample the signal, a second activation threshold is established that the received and amplified signal must exceed before carrying out the sampling.

More preferably, the step of establishing whether or not said received amplified signal is indicative of the presence of an object between the receiver and the emitter includes:
- if said activation threshold is exceeded by a sampling value corresponding to the emission of the jth pulse of the pulse train, establishing that no objects are present between receiver and emitter if all the sampling values i=1.....n-(j-1) exceed the detection threshold.

The values of the sampling series $S_1$...$S_n$ may or may not coincide with some values of the signal received and amplified at the emission of the n pulses. Frequently, the n sampling values comprise, for a part of the series, some values corresponding to a signal received in concomitance with some pulses of the same pulse train that are above a certain amplitude, and for the remaining part of the series these are values substantially corresponding to a received noise signal. Therefore, in order to determine whether the jth pulse has been detected, it is not enough to correctly detect the jth sampling value $S_j$ because it might not correspond to the jth pulse. In order to be sure that the jth pulse has been detected, and therefore a received and amplified signal corresponding to the jth pulse has exceeded the detection threshold, at least n-(j-1) sampling values must have exceeded the detection threshold. In the case in which the activation threshold is therefore exceeded by a value corresponding to the jth pulse, the jth pulse is correctly detected if all the sampling values i=1 .....n-(j-1) exceed the detection threshold.

Advantageously, the step of establishing whether or not said received and amplified signal is indicative of the presence of an object between the receiver and the emitter includes:

◦ if said second threshold is exceeded by an received and amplified signal corresponding to the emission of the (i < j)th pulse of the pulse train, establishing that no objects are present between receiver and emitter if all the sampling values with k = j-(i-1),.....n-(i-1) exceed the detection threshold.

The values of the sampling series $S_1...S_n$ may or may not coincide with some values of the signal received and amplified at the emission of the n pulses. Frequently, the n sampling values comprise, for a part of the series, some values corresponding to a signal received in concomitance with some pulses of the series that are above a certain amplitude, and for the remaining part of the series are some values essentially corresponding to a received noise signal. Therefore, in order to determine whether the jth pulse has been detected, it is not enough to correctly detect the jth sampling value $S_j$ because it might not correspond to the jth pulse. In order to be sure that the jth pulse has been detected - and therefore a received and amplified signal corresponding to the jth pulse has exceeded the detection threshold - at least n-(j-1) sampling values must have exceeded the detection threshold. In the case in which the activation threshold is therefore exceeded by a value corresponding to the ith pulse, with i < j, the jth pulse is correctly detected if all the sampling values k=i-j.....n-(i-1) exceed the detection threshold.

Preferably, the step of establishing whether or not said received amplified signal is indicative of the presence of an object between the receiver and the emitter includes:

◦ if said activation threshold is exceeded by a received amplified signal corresponding to the emission of the (i > j)th pulse of the pulse train, not establishing that no objects are present between receiver and emitter.

The values of the sampling series $S_1...S_n$ may or may not coincide with some values of the signal received and amplified at the emission of the n pulses. Frequently, the n sampling values comprise, for a part of the series, some values corresponding to a signal received in concomitance with some pulses of the series that are above a certain amplitude, and for the remaining part of the series are some values essentially corresponding to a received noise signal. Therefore, in order to determine whether the jth pulse has been detected, it is not enough to correctly detect the jth sampling value $S_j$ because it might not correspond to the jth pulse. In order to be sure that the jth pulse has been detected, and therefore a received and amplified signal corresponding to the jth pulse has exceeded the detection threshold, at least n-(j-1) sampling values must have exceeded the detection threshold. Nevertheless, if the activation threshold was exceeded by a received amplified signal corresponding to the emission of the (i > j)th pulse of the pulse train, this implies that very probably the sampling values $S_{n-(i+1)}$ to $S_n$ (which are greater in number than j) are very close to zero or in any case are noise values inasmuch as they do not correspond to the transmission of any pulse. It is rather improbable that these values will exceed the detection threshold and therefore there are not at least n-j sampling values that exceed the detection threshold and therefore the jth pulse cannot have been correctly received.

Preferably, the method of the invention includes the step of:

◦ synchronizing said receiver with the jth signal if said signal exceeds said detection threshold.

As known in the case of sensors in which emitter and receiver are separated from each other, the receiver must synchronize with the emitter in order to establish when it must carry out the sampling, that is, when the pulse train will be emitted in such a way as to receive within the corresponding time interval. To do this, the receiver must first of all "understand" when the first pulse train is received, and, once a correct detection of the first train is established, periodically repeat the detection measure with a period T. Therefore, for the synchronization procedure, it is important that the first pulse train is positively detected. According to the invention, also the synchronization is started when the jth pulse is correctly detected. In other words, what is being sought is not the synchronization with the entire pulse train, but with the jth pulse. When this pulse is correctly detected via the logic of the invention indicated above, the synchronization starts and the period T receiver repeats the acquisition.

More preferably, the method includes repeating the sampling of said received amplified signal at each period T if it has been established that no object is present between said emitter and said receiver.

## Brief description of the drawings

The present invention is described in greater detail with non-limiting reference to the attached drawings, in which:

- figure 1 is a diagram of an optoelectronic sensor produced according to the invention in a first and a second operational condition;
- figure 2 is a graph related to a preferred example of signal emitted by an emitter of the sensor of figure 1;
- figure 3 is a schematic representation of an exemplary embodiment of a receiver of the sensor of figure 1;
- figure 4a is a first exemplary embodiment of a regulation element for the regulation of a gain of the amplification stage of the receiver of figure 3;
- figure 4b is a second exemplary embodiment of a regulation element for the regulation of a gain of the amplification stage of the receiver of figure 3;
- figure 5 represents a plurality of graphs of signals in the receiver of figure 3 in a condition of reception of an electromagnetic radiation from the receiver of figure 3;
- figure 6 represents a plurality of graphs of signals in the receiver of figure 3 in a second condition of reception of an electromagnetic radiation from the receiver of figure 3;
- figure 7 represents a plurality of graphs of signals in the receiver of figure 3 in a third condition of reception of an electromagnetic radiation from the receiver of figure 3;
- figure 8 represents a plurality of graphs of signals in the receiver of figure 3 in a fourth condition of reception of an electromagnetic radiation from the receiver of figure 3;
- figure 9 represents a plurality of graphs of signals in the receiver of figure 3 in a fifth condition of reception of an electromagnetic radiation from the receiver of figure 3;
- figure 10 represents a plurality of graphs of signals in the receiver of figure 3 in a sixth condition of reception of an electromagnetic radiation from the receiver of figure 3; and
- figure 11 represents a block diagram of the reception method of the optoelectronic sensor of the invention.

Detailed description of exemplary embodiments of the invention

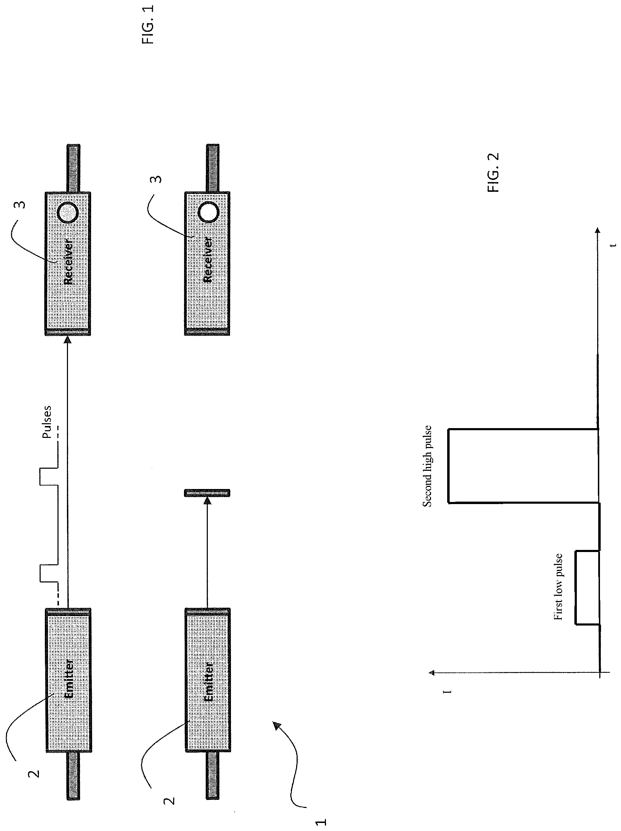

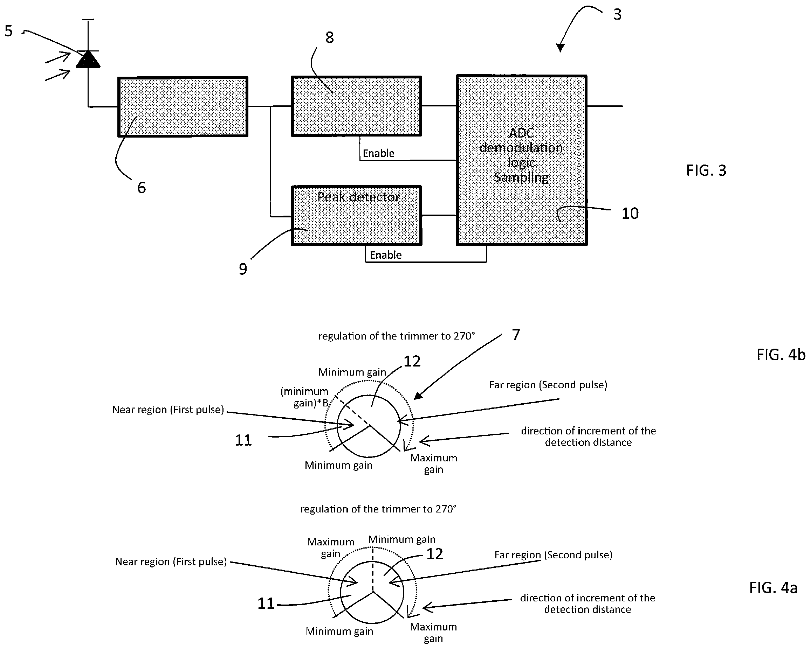

In figure 1 an optoelectronic sensor arranged for identifying an object O is globally indicated with 1.
The sensor 1 includes an emitter 2 and a receiver 3 spatially separated by a distance d. Emitter 1 is thus configured so as to emit a pulse train within an overall time $T_{on}$, including two pulses as represented in figure 2 (the figure is not to scale). The pulse train comprises a first pulse of amplitude $A_{max}/B$ and a second pulse of amplitude $A_{max}$. The two pulses are repeated with a period T in which $T>>T_{on}$. B is an integer value better identified below. For example, the period of the pulse train can be 300 microseconds, with $T_{on}$ of the total train equal to 20 microseconds and every single pulse lasts 5 microseconds (and the two pulses are therefore spaced 10 microseconds apart).
Sensor 1 is arranged for determining the presence of the object O in the following way, as schematically represented in figure 1: in absence of the object O between emitter 2 and receiver 3, the pulse train in its entirety reaches receiver 3, while in the event that object O is interposed, the transmission of pulses between emitter 2 and receiver 3 is interrupted. The detection is executed as follows.
With reference to figure 3, the receiver 3 includes a photodiode 5 arranged for transforming the electromagnetic radiation received in an electrical signal. The electrical signal emitted by the photodiode 5 is therefore amplified by an amplification stage 6 positioned downstream of photodiode 5, the amplification stage 6 having a variable gain. The gain of the amplifier is variable between a maximum gain and a minimum gain, the ratio of which defines the dynamic D of the amplification stage. For example, D is equal to 800 or 1000.
The regulation of the gain of the amplification stage 6 is regulated via a regulation element, such as a trimmer 7, represented in detail in figures 4a and 4b. Trimmer 7 can have any shape whatsoever, for example, that of a knob, and it is movable within a plurality of points inside a regulation range. An exemplary embodiment of a knob trimmer is represented in figures 4a and 4b. Trimmer 7 defines a regulation range. For example, in the case of a knob, the regulation range is delimited from an end-of-stroke point on the right to an end-of-stroke point on the left in the case of counterclockwise rotation, or in the case of clockwise rotation as in the figures from an end-of-stroke on the left to and end-of-stroke on the right. Obviously, a trimmer can be realized in any way whatsoever, for example, with a linearly movable bar or with a touch screen or any other device arranged for selecting a point within a regulation range.
The regulation range of the trimmer 7 is divided into n zones that are contiguous and consecutive with respect to each other. With the number of pulses equal to 2, also the number of zones is equal to two, and in the specific example, the first zone is called "near region" 11, that is, it is related to "small" distances between receiver 3 and emitter 2 and the second zone is called "far region" 12 and is related to "large" distances between emitter 2 and receiver 3. By convention in the figure, it has been established that the near region 11 is the region to the left and the far region 12 is to the right. The two zones 11, 12 are separated in the figures by a dashed line. Therefore, the first zone or near region 11 comprises the points that correspond to the minimum distance at which emitter 2 and receiver 3 are positionable up to an intermediate distance. The second zone or far region 12 comprises the points that correspond from the intermediate distance to the maximum distance. When a point within the regulation range of trimmer 7 is selected, that is, when the distance at which emitter 2 and receiver 3 are positioned relative to each other is selected, a gain in amplification stage 6 is selected at the same time. To this end, a point in the regulation range remains selected in trimmer 7, a point that can alternatively be located either in first zone 11 or in second zone 12. In each zone of the trimmer 7, both in the near region 11 and in the far region 12, moving the selected point from left to right (therefore, increasing the distance between emitter 2 and receiver 3) increases the gain of the amplifier stage 6. In the far region zone 12, if the right end-of-stroke point is selected, the maximum gain that can be set is selected in amplification stage 6 (corresponding to the maximum distance at which emitter 2 and receiver 3 can be positioned). Moving toward the first point or initial point of the far region 12, the gain drops (like the distance), until, when selecting a point on the dashed line of division with the near region 11, the gain selected like this is equal to the minimum gain that can be selected in amplification stage 6. Moving to the first point more to the right of the near region 11, the gain that can be set selecting this point in amplification stage 6 returns to a value equal to (minimum gain that can be set)* B where B is an integer equal to the ratio between the amplitudes of two consecutive pulses in the pulse train, in this case equal to the ratio between (amplitude of second pulse)/(amplitude of first pulse). B therefore turns out to be $\leq$ D, a point would otherwise be obtained at which it is desired to obtain a gain above that which can be set in the amplification stage. At the extreme left, at the end of the near region 11 corresponding to the point of minimum distance between emitter 2 and receiver 3, the gain goes down to the minimum gain that can be set in amplification stage 6.

In figure 4a, the regulation range of the trimmer 7 includes two zones of essentially equal amplitude because B = D, and, therefore, both in first zone 11 and in second zone 12 the gain can be selected between the minimum value of the gain that can be set and the maximum value of the gain that can be set. In figure 4b the two zones have a different amplitude, the zone of near region 11 having an extension less than that of far region 12 because a value B < D was selected.

The receiver 3 downstream from amplification stage 6, the gain of which can be regulated by trimmer 7, includes a comparator 8 configured for comparing the received and amplified output signal from stage 6 with a first threshold or activation threshold. The output of the comparator 8 is an activation signal, that is the comparator 8 is configured to emit an activation signal, for example, an activation pulse, when the received and amplified signal exceeds the first threshold. Otherwise the comparator 8 does not emit anything.

The same output signal from stage 6 is input into a peak detector 9, which, in the case in which the signal exceeds the threshold, is arranged for maintaining the maximum amplitude value of the received and amplified as an output for a certain interval of time.

The enable signal of the comparator 8 means that it is activated, in other words that the output of the comparator is "listened to" by the control logic (ENABLE = 1). During the synchronization step, the comparator 8 essentially is always enabled until a signal above the activation threshold is received, while it is enabled only in the read window when the synchronization has already been performed. In the latter case, the comparator 8 is disabled (ENABLE=0) substantially for a period a little less than Toff; then impeding the system from "reading" the signal outside the periodicity set by the emission.

Also, the peak detector 9 has an ENABLE signal. When ENABLE = 1, the peak 9 detector is permitted to activate and to maintain the maximum value of the signal. When ENABLE = 0, its previously acquired value is discarded and the analog signal being received is not followed.

The output signal from the comparator 8 is the one being output by the peak detector 9 are sent to a logic block 10 having different functions. The logic block 10 first of all has the function of a sampling unit. The sampling unit is active only when the output signal from the first comparator 8 is an activation signal. The sampling unit, starting with the instant in which the comparator 8 sends the activation signal, samples at time intervals equal to the distance between the first and the second pulse of the emission signal, that is, at an instant t1 of the arrival of the activation signal and at an instant t2 spaced apart from t1 by a time equal to the distance between the first pulse and the second pulse in the pulse train emitted by the emitter 2, the received and amplified signal. The sampling unit is therefore arranged for determining a plurality of sampling values equal to the number of pulses, in this case two sampling values called S1 and S2, each sampling value representing the amplitude of the received output signal from the amplification stage 6 at the moment of sampling, that is at times t1 and t2.

Moreover, the logic block 10 further has the function of a second comparator. The second comparator is arranged for comparing the two sampling values to a second threshold called "detection" threshold. The second threshold is greater than the first threshold.

Therefore, the logic block 10 has the function of a demodulation unit, in other words of a logic unit arranged for determining whether or not the sampling values S1 and S2 represent a detection of an object O between receiver 3 and emitter 2.

The decision of demodulation unit as to whether or not an object O was seen or the pulse train originating from emitter 2 was correctly received in its entirety depends on both the zone of the regulation range of trimmer 7 that was selected and from the result of the comparison with the second threshold.

Therefore, according to the method of the invention, a distance d is selected - by a user or automatically - at which emitter 2 and receiver 3 of optoelectronic sensor 1 are positioned. Based on the value of this distance, a point in the regulation range of trimmer 7 is selected, a point that can be located either in first zone 11 or in second zone 12 as defined above. This selection also determines the gain of amplification stage 6. Therefore, the electromagnetic radiation represented in figure 2 is emitted by emitter 2 and is received by receiver 3, transformed into an electrical signal and then amplified. This amplified radiation downstream from stage 6 is compared to the first comparator 8, and, in the case in which a first threshold is exceeded, a sampling of the amplified signal is started at two points spaced apart by the same distance in the time sequence that is present between the first and second pulse of figure 2.

The decision logic is detailed with the following truth tables.

The values S1 and S2 are compared via a second comparator to the second threshold and it is established that S1 and/or S2 are placed equal to "0" if they are below the second threshold, otherwise, they are placed equal to "1" if they are above the second threshold.

Furthermore, from an analysis of the values of S1 and S2 after this comparison, the logic of demodulation establishes the value of the detection: "1" if the emitter 2 is correctly recognized; otherwise, "0". Emitter 2 correctly received means that the pulses of the train emitted by emitter 2 have been identified. However, depending on the zone to which the point selected in trimmer 7 belongs, not all of the pulses have the same relevance in this determination, that is, emitter 2 may be considered as correctly detected even if it was possible to receive and recognize an amplified electrical signal corresponding to all of the n pulses emitted.

The output of sensor 1 is set in the "detected extraneous object" and is not detected after a certain consecutive number k of detection cycles that came to a satisfactory result and carrying the same result (that is, after a series of k equal to 1 or k equal to 0).

The logic of the demodulation unit is described here below and is first considered in the case in which the point selected in trimmer 7 indicates that a distance between emitter 2 and receiver 3 is relatively "small" and that therefore the point selected via trimmer 7 in the regulation range is located in first zone 11. As said, there are two pulses of the pulse train because the number of sampling values is also equal to two, S1 and S2.

Therefore, in first zone 11 the relevant pulse is the first pulse. In order to ensure that the sampling values are related to the first pulse, and that the latter exceeds the detection threshold, thus, the first and second sampling value must both exceed the reception threshold. In this case, the first pulse of the train is correctly received.

The operational situations in which the sensor 1 can be found are exemplified here below.

If the first comparator 8 emits an activation signal corresponding to the first pulse, then:

TABLE 1

| Sequence | First sample S1 | Second sample S2 | Detection status | Description |
|---|---|---|---|---|
| A | 0 | 0 | - | Impossible, the second pulse is much greater than the first. If the first comparator emits an activation signal with the first "low" pulse, it is obvious that the second pulse is higher than the detection threshold (second threshold). |
| B | 0 | 1 | 0 | Only the second pulse is received |
| C | 1 | 1 | 1 | Both pulses received |
| D | 1 | 0 | - | Impossible |

If the first comparator 8 emits an activation signal corresponding to the second pulse, then:

TABLE 2

| Sequence | First sample S1 | Second sample S2 | Detection status | Description |
|---|---|---|---|---|
| E | 0 | 0 | 0 | Signal below the second threshold (no detection) |
| F | 1 | 0 | 0 | Only the second pulse is received |

Now considered is the case in which the point selected in trimmer 7 indicates that a distance between emitter and receiver is relatively "large" and that therefore the point selected via trimmer 7 in the regulation range is located in second zone 12. As said, there are two pulses of the pulse train because the number of sampling values is also equal to two, S1 and S2.

Therefore, in second zone 12 the relevant pulse is the second pulse. In order to ensure that the sampling values are related to the second pulse, and that the latter exceeds the detection threshold, it is necessary that solely one value of the sampled values exceeds the reception threshold.

If the first comparator 8 emits an activation signal corresponding to the first pulse, then:

TABLE 3

| Sequence | First sample S1 | Second sample S2 | Detection status | Description |
|---|---|---|---|---|
| A | 0 | 0 | - | *Impossible, the second pulse is much greater than the first. If the first comparator emits an activation signal with the first "low" pulse, it is obvious that the second pulse is higher than the detection threshold (second threshold).* |
| B | 0 | 1 | 1 | *Only the second pulse is received* |
| C | 1 | 1 | 1 | *Both pulses received* |
| D | 1 | 0 | - | *Impossible* |

If the first comparator 8 emits an activation signal corresponding to the second pulse, then:

TABLE 4

| Sequence | First sample S1 | Second sample S2 | Detection status | Description |
|---|---|---|---|---|
| E | 0 | 0 | 0 | *Signal below the second threshold (no detection)* |
| F | 1 | 0 | 1 | *Only the second pulse is received* |

Therefore, when the point selected in the regulation range of trimmer 7 is in first zone 11, an object is detected only when both S1 and S2 are above the second threshold, that is, when both are equal to "1".

Therefore, when the point selected in the regulation range of trimmer 7 is in second zone 12, the signal of emitter 2 is not detected only when both S1 and S2 are below the second threshold, that is, when both are equal to "0".

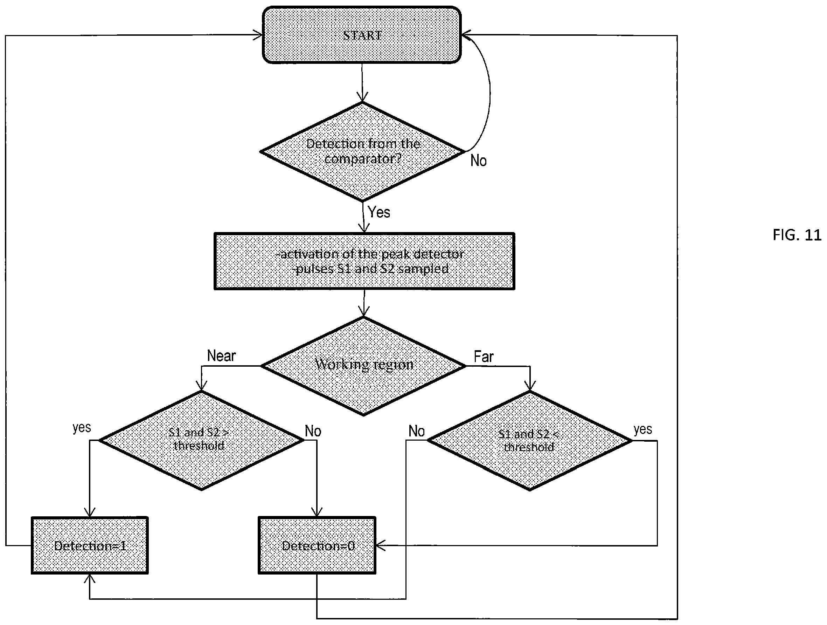

This logic is indicated in its entirety in the block diagram of figure 11.

The above logic is also utilized to carry out the synchronization of receiver 3 with respect to emitter 2. In the case of asynchronous sensors, the receiver is not aware of the moment of emission of the pulse from the emitter, and, therefore, the receiver must find the "the instant of departure" from which to execute a sampling of the received signal at a frequency equal to that of the emitted signal, so that it can be received when the signal is emitted. To start the synchronization, a correct detection of a signal emitted by the emitter is therefore necessary.

As mentioned, in first zone 11 the detection of the signal of emitter 2 is positive when the first pulse is detected, while in second zone 12 the detection of the signal of emitter 2 is positive when the second pulse is detected. According to the invention, if the point selected in the regulation range of trimmer 7 is in the first zone 11, this synchronization considers the relevant pulse to be the first pulse of the pulse train that is emitted, that is, it wants to be synchronized with the first pulse, while, if it is in second zone 12, it wants to be synchronized with the second pulse.

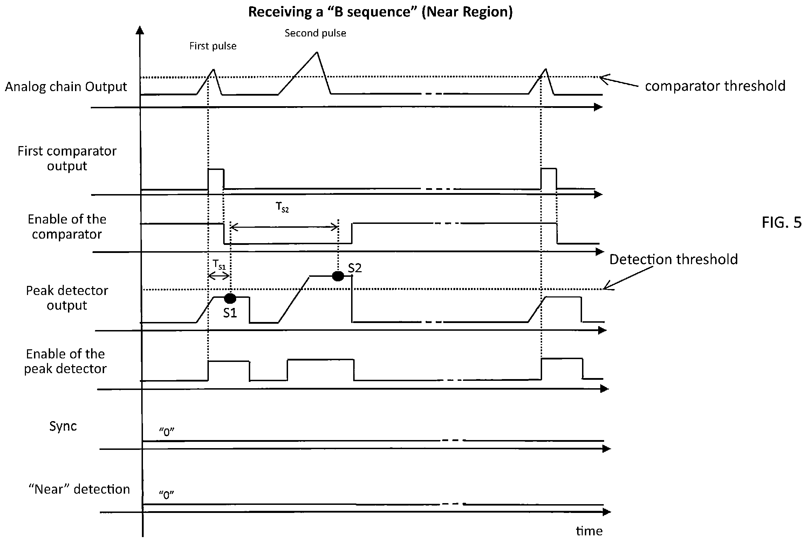

The tables above correspond to the attached figures 5-10.

The operational condition of optoelectronic sensor 1 corresponding to sequence B in the case in which trimmer 7 is located at a point in first zone 11 (see table 1) is displayed in figure 5. In this case, the received and amplified signal that corresponds to the first emitted pulse is above the first threshold (represented by a dashed line parallel to the axis of the ordinates in the graph at the top in figure 5 that represents the output of amplification stage 6), and, therefore, the first comparator 8 emits an activation signal, which is given by the pulsed signal, visible in the second graph from the top. Two values S1 and S2 are therefore sampled at a distance equal to the distance in the time sequence between the first and second pulses, and whose value is equal to the maximum of the received signal as identified by the peak detector 9. S1 and S2 in this case are exactly the maximum amplitude of the signal received and amplified at the first and second pulses. S1 and S2 are therefore compared to the second threshold represented by the line parallel to the axis of the ordinates in the fourth graph from the top of figure 5. In the specific case, only the second value S2 is above the threshold; therefore, the result of the comparison with the second threshold is "0" for S1, while it is "1" for S2. Since we are in first zone 11, the signal of interest is the first one having an amplitude equal to that of the second divided by B. Since the first signal is not above the second threshold, the synchronization does not start (signal "0" in the detection, see the penultimate graph at the bottom), and the signal originating from the emitter is not deemed to have been correctly detected (signal "0" as a result of the detection, see the last chart below).

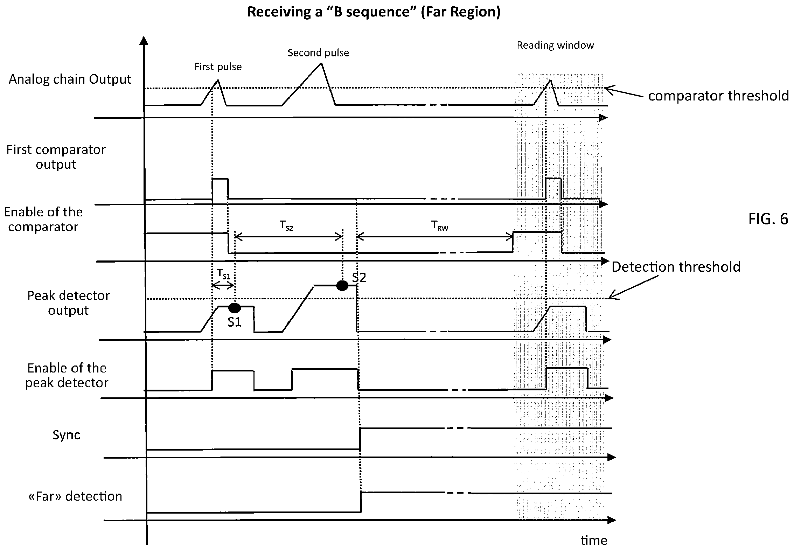

The operational condition of optoelectronic sensor 1 corresponding to sequence B in the case in which trimmer 7 is located at a point in second zone 12 (see table 1) is displayed in figure 6. In this case, the received and amplified signal that corresponds to the first emitted pulse is above the first threshold (represented by a dashed line parallel to the axis of the ordinates in the graph at the top in figure 6 that represents the output of amplification stage 6), and, therefore, the first comparator 8 emits an activation signal, which is given by the pulsed signal, visible in the second graph from the top. Two values S1 and S2 are therefore sampled at a distance equal to the distance in the time sequence between the first and second pulses, and whose value is equal to the maximum of the received signal as identified by the peak detector 9. S1 and S2 in this case are exactly the maximum amplitude of the signal received and amplified at the first and second pulses emitted by the emitter. S1 and S2 are therefore compared to the second threshold represented by the line parallel to the axis of the ordinates in the fourth graph from the top of figure 6. In the specific case, only the second value S2 is above the threshold; therefore, the result of the comparison with the second threshold is "0" for S1, while it is "1" for S2. Because we are in the second zone 12, the signal of interest is the second one having a maximum amplitude, and the detection of the first signal is not relevant. Because the second signal is above the second threshold independently from what occurs for the first signal, it is determined that the signal originating from emitter 2 (see the step at "1" in the synchronization signal in the first graph from the bottom) was correctly detected and the synchronization starts (see the step at "1" in the synchronization signal in the second graph from the bottom), as is also visible from the presence of a further reception window at a period T equal to the period of the signal emitted by emitter 2.

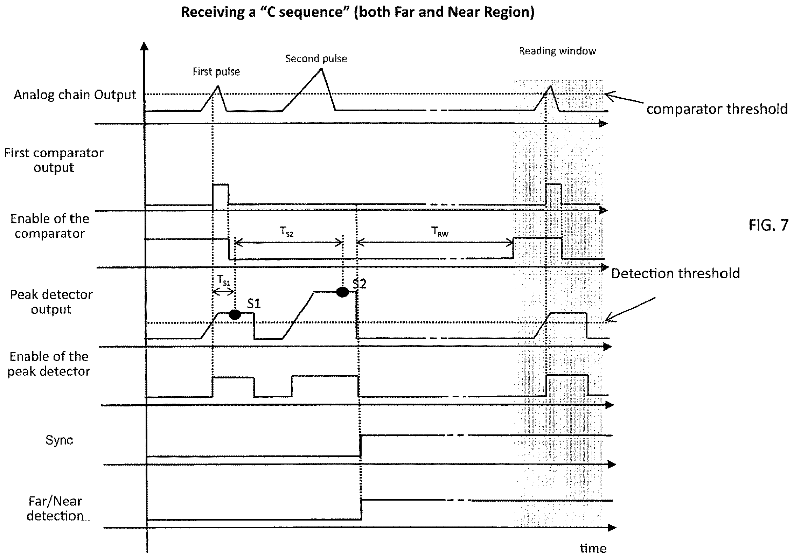

The operational condition of optoelectronic sensor 1 corresponding to sequence C in the case in which trimmer 7 is located at a point in first zone 11 (see table 1) or in second zone 12 (see table 3) is displayed in figure 7. In this case, the received and amplified signal that corresponds to the first emitted pulse is above the first threshold (represented by a dashed line parallel to the axis of the ordinates in the graph at the top in figure 7 that represents the output of amplification stage 6), and, therefore, the first comparator 8 emits an activation signal, which is given by the pulsed signal, visible in the second graph from the top. Two values S1 and S2 are therefore sampled at a distance equal to the distance in the time sequence between the first and second pulses, and whose value is equal to the maximum of the received signal as identified by the peak detector 9. S1 and S2 in this case are exactly the maximum amplitude of the signal received and amplified at the first and second pulses emitted by the emitter 2. S1 and S2 are therefore compared to the second threshold represented by the line parallel to the axis of the ordinates in the fourth graph from the top of figure 7. In the specific case, both value S1 and S2 are above the threshold; therefore, the result of the comparison to the second threshold is "1" for S1, and it is "1" for S2. In the case in which trimmer 7 is in first zone 11, the signal of interest is the first one. Because this signal is correctly detected ("1") and so is the next signal, that is, S2, the signal originating from emitter 2 can be deemed to have been correctly identified. The synchronization may be initiated, as is visible from the step at "1" in the synchronization signal in the second graph from the bottom and from the presence of the additional reception window at a period T equal to the period of the signal emitted by emitter 2. Furthermore, the signal from emitter 2 having been correctly detected and S1 and S2 having both exceeded the second threshold, the correct reception signal of emitter 2 goes to "1" as is visible in the last graph at the bottom. If trimmer 7 selects a point in first zone 11 as in the preceding case, because we are in the second zone 12, the signal of interest is the second one having a maximum amplitude, and the detection of the first signal is not relevant. Because the second signal is above the second threshold independently from what occurs for the first signal, it is determined that the signal originating from emitter 2 (see the step at "1" in the synchronization signal in the first graph from the bottom) was correctly detected and the synchronization starts (see the step at "1" in the synchronization signal in the second graph from the bottom), as is also visible from the presence of a further reception window at a period T equal to the period of the signal emitted by emitter 2.

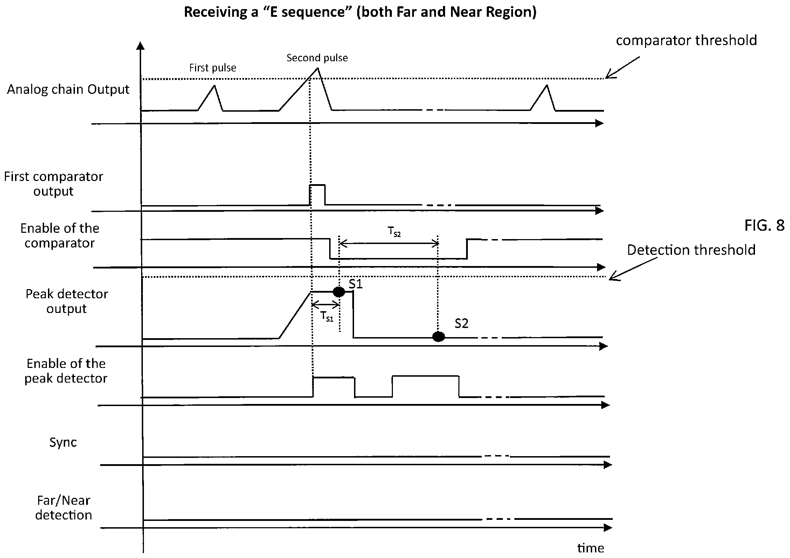

The operational condition of optoelectronic sensor 1 corresponding to sequence E in the case in which trimmer 7 is located at a point in first zone 11 (see table 2) or in second zone 12 (see table 4) is displayed in figure 8. In this case, only the received and amplified signal corresponding to the second emitted pulse is above the first threshold (represented by a dashed line parallel to the axis of the ordinates in the graph at the top in figure 8 that represents the output of amplification stage 6), and, therefore, the first comparator 8 emits an activation signal that is given by the pulsed signal visible in the second graph from the top. Two values S1 and S2 are therefore sampled at a distance equal to the distance in the time sequence between the first and second pulses, and whose value is equal to the maximum of the received signal as identified by the peak detector 9. S1 and S2 in this case are the maximum amplitude of the signal received and amplified at the second pulse emitted by the emitter 2 and the amplitude of a signal received when no signal is emitted by emitter 2, therefore, it is substantially a measure of noise. S1 and S2 are therefore compared to the second threshold represented by the line parallel to the axis of the ordinates in the fourth graph from the top in figure 8. In the specific case, it is very difficult for the value of S2 to be above the threshold (except for the presence of a very strong noise) and therefore in general this cannot exceed the second threshold given a result equal to "0" in the second comparison. Also S1 is not above the threshold, therefore the result of the comparison to the second threshold is "0" even for S1. Therefore, in neither case - whether it be in first zone 11 or in second zone 12 - was the reference signal, which is the first or second pulse, correctly detected. Therefore, in no case is it established that the signal emitted by emitter 2 was correctly detected having a "0" n the comparison for S1 as well as S2. The synchronization (signal "0" in the detection, see the penultimate graph at the bottom) is not started and the signal originating from emitter 2 is not considered to have been correctly detected (signal "0" as a result of the detection, is seen in the last graph at the bottom).

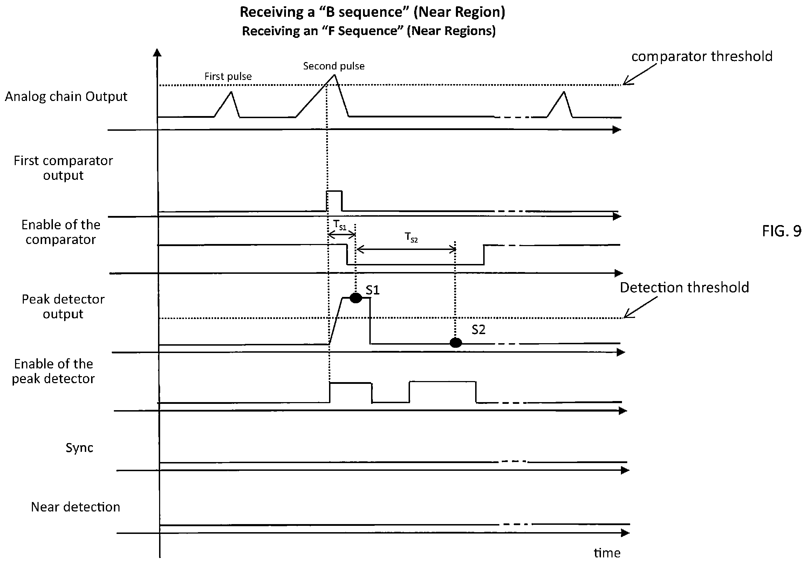

The operational condition of optoelectronic sensor 1 corresponding to sequence F in the case in which trimmer 7 is located at a point in first zone 11 (see table 2) is displayed in figure 9. In this case, only the received and amplified signal corresponding to the second emitted pulse is above the first threshold (represented by a dashed line parallel to the axis of the ordinates in the graph at the top in figure 9 that represents the output of amplification stage 6), and, therefore, the first comparator 8 emits an activation signal that is given by the pulsed signal visible in the second graph from the top. Two values S1 and S2 are therefore sampled at a distance equal to the distance in the time sequence between the first and second pulses, and whose value is equal to the maximum of the received signal as identified by the peak detector 9. S1 and S2 in this case are the maximum amplitude of the signal received and amplified at the second pulse emitted by the emitter 2 for S1 and the amplitude of a signal received when no signal is emitted by emitter 2 for S2, therefore, it is substantially a measure of noise. S1 and S2 are therefore compared to the second threshold represented by the line parallel to the axis of the ordinates in the fourth graph from the top of figure 9. In the specific case, it is very difficult for the value of S2 to be above the threshold (except for the presence of a very strong noise) and therefore in general this cannot exceed the second threshold given a result equal to "0" in the second comparison. S1 on the other hand is above the threshold, therefore the result of the comparison with the second threshold is "1" for S1. Nevertheless, in this case with trimmer 7 being in first zone 11, the reference signal is the first pulse of the signal emitted by emitter 2. Since this first pulse is not detected, it is not established that the signal emitted by emitter 2 has been correctly detected, although there is a "1" for S1 in the comparison. The synchronization (signal "0" in the detection, see the penultimate graph at the bottom) is not started and the signal originating from emitter 2 is not considered to have been correctly detected (signal "0" as a result of the detection, is seen in the last graph at the bottom).

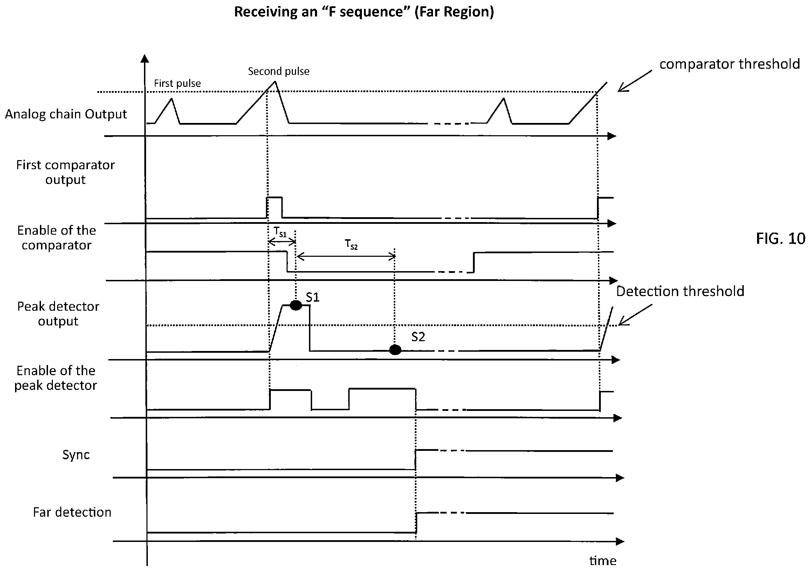

The operational condition of optoelectronic sensor 1 corresponding to sequence F in the case in which trimmer 7 is located at a point in second zone 12 (see table 4) is displayed in figure 10. In this case, only the received and amplified signal corresponding to the second emitted pulse is above the first threshold (represented by a dashed line parallel to the axis of the ordinates in the graph at the top in figure 10 that represents the output of amplification stage 6), and, therefore, the first comparator 8 emits an activation signal that is given by the pulsed signal visible in the second graph from the top. Two values S1 and S2 are therefore sampled at a distance equal to the distance in the time sequence between the first and second pulses, and whose value is equal to the maximum of the received signal as identified by the peak detector 9. S1 and S2 in this case are the maximum amplitude of the signal received and amplified at the second pulse emitted by the emitter 2 for S1 and the amplitude of a signal received when no signal is emitted by emitter 2 for S2, therefore, it is substantially a measure of noise. S1 and S2 are therefore compared to the second threshold represented by the line parallel to the axis of the ordinates in the fourth graph from the top of figure 9. In the specific case, it is very difficult for the value of S2 to be above the threshold (except for the presence of a very strong noise) and therefore in general this cannot exceed the second threshold given a result equal to "0" in the second comparison. S1 on the other hand is above the threshold, therefore the result of the comparison with the second threshold is "1" for S1. Because we are in the second zone 12, the signal of interest is the second one having a maximum amplitude, and the detection of the first signal is not relevant. Because the second signal is above the second threshold independently from what occurs for the first signal, it is determined that the signal originating from emitter 2 (see the step at "1" in the synchronization signal in the first graph from the bottom) was correctly detected and the synchronization starts (see the step at "1" in the synchronization signal in the second graph from the bottom), as is also visible from the presence of a further reception window at a period T equal to the period of the signal emitted by emitter 2.

**Claims**

1. An optoelectronic sensor (1) including:

   ◦ a receiver (3) arranged for receiving electromagnetic radiation, the receiver (3) comprising a photodetector (5) arranged for transforming the electromagnetic radiation received into a received electrical signal and an amplification stage (6) having variable gain between a minimum gain and a maximum gain arranged for amplifying said received electrical signal;
   ◦ an emitter (2) arranged for emitting a periodic electromagnetic radiation including a pulse train in each period, each pulse train including n pulses, where n ≥ 2, and wherein each jth pulse with j = 1,....,n of the train having an amplitude equal to:

$$A_j = A_{j-1}*B$$

   ◦ a regulation element (7) configured for the regulation of the gain of the amplification stage (6) of the receiver (3);

**characterized in that**:

B is an integer greater than 0 with B ≤ D where D = (maximum gain of the amplification stage/minimum gain of the amplification stage); and

the regulation element (7) has a regulation range subdivided into a number n of consecutive zones (11; 12) equal to the number n of the pulses of the pulse train emitted by the emitter (2), the first zone (11) related to distances between emitter (2) and receiver (3) starting from a minimum distance possible for using the optoelectronic sensor (1) and the n-th zone (12) related to distances between emitter (2) and receiver (3) terminating with a maximum distance possible for using the optoelectronic sensor (1); said gain of said amplification stage (6) being selected by selecting a point in a zone (11; 12) of said regulation range of the regulation element (7); said regulation range being produced in such a way that in each zone $j \neq n$ of the regulation range, moving a point selected within said regulation element (7) inside the j-th zone in the direction from the starting point adjacent to the (j-1)th zone toward the endpoint adjacent to the (j+1)-th zone, the corresponding gain set up in the amplification stage (6) is moved from the minimum gain that can be set up in the amplification stage (6) to the minimum gain that can be set up in the amplification stage (6) multiplied by the integer B equal to the ratio of the amplitude between two consecutive pulses in a same pulse train.

2. The optoelectronic sensor (1) according to claim 1, including a logic unit (10) arranged for processing said received signal and amplified in a manner dependent on the zone (11; 12) selected within the gain range of the regulation element (7).

3. The optoelectronic sensor (1) according to claim 2, wherein said logic unit (10) is configured to establish the positive detection of the pulse emitted by the emitter (2) if - the jth zone of the regulation range being selected - a signal corresponding to said jth pulse is correctly received.

4. The optoelectronic sensor (1) according to one or more of the preceding claims, including a sampling unit (10) arranged for sampling an amplitude of said received electrical signal and amplified at n points spaced apart in time sequence by the same distance present between said n pulses so as to obtain n sampling values $S_1....S_n$.

5. The optoelectronic sensor (1) according to claim 3, including a first comparator (8) downstream of said sampling unit (10), said first comparator (8) being arranged for comparing said n sampling values to a detection threshold.

6. The optoelectronic sensor (1) according to claim 4, including a logic unit (10) configured for establishing whether or not said n sampling values are indicative of an object being present between the receiver (3) and the emitter (2) based on said comparison with said detection threshold and based on the zone (11; 12) selected from among the n of the regulation range of the regulation element (7).

7. The optoelectronic sensor (1) according to claim 4 or 5, comprising a second comparator upstream said sampling unit, said second comparator being arranged for comparing a received signal and amplified to an activation threshold, less than said detection threshold, and arranged for activating the sampling unit for sampling an amplitude of said received electrical signal and amplified at n points if said received and amplified signal exceeds said activation threshold.

8. Method of processing an electric signal that is a function of an electromagnetic radiation emitted by an emitter (2) of an optoelectronic sensor (1) made according to one or more of claims 1 to 7, said method including:

   ◦ selecting a point in the jth zone of the regulation range in the regulation element (7) in such a way as to determine the gain of said amplification stage;
   ◦ emitting said pulse train from said emitter (2);
   ◦ receiving an electromagnetic radiation from said receiver (3) during the emission of said pulse train;
   ◦ generating an electrical signal that is a function of said received radiation and amplifying the electrical signal;
   ◦ establishing whether or not said received amplified signal is indicative of a presence of an object between the receiver (3) and the emitter (2) based on an amplitude of said received signal in at least one point and based on the value j of the jth zone selected between the n of the regulation range of the regulation element (7).

9. Method according to claim 8, wherein the step of establishing whether or not said received amplified signal is indicative of a presence of an object between the receiver (3) and the emitter (2) includes:

○ establishing a detection threshold value;
○ if said detection threshold is exceeded by an amplitude at a point of the received and amplified signal corresponding to the emission of the jth pulse of the pulse train, establishing that no objects are present between receiver (3) and emitter (2) if all the amplitude values of the received and amplified signal corresponding to the emissions of the pulses i=1.....n-j of the pulse train also exceed the detection threshold.

10. Method according to claim 8 or 9, including - subsequently to the step of receiving an electromagnetic radiation and before the step of establishing whether or not the received and amplified signal is indicative of the presence of an object - the steps of:

○ sampling an amplitude of said received electrical signal and amplified at n points spaced apart in time sequence by the distance present between said n pulses so as to obtain n sampling values $S_1....S_n$; and
○ comparing said n sampling values to a detection threshold.

11. Method according to claim 10, wherein the step of establishing whether or not said received amplified signal is indicative of a presence of an object between the receiver (3) and the emitter (2) comprises the step of establishing whether or not said received amplified signal is indicative of a presence of an object between the receiver (3) and the emitter (2) based on said comparison to the detection threshold and based on the value of j in the jth zone selected from among the n of the regulation range of the regulation element (7).

12. Method according to claim 10 or 11, comprising the step of:
○ initiating the step of sampling said received amplified signal at n points when said received amplified signal exceeds an activation threshold less than said detection threshold.

13. Method according to claim 12, wherein the step of establishing whether or not said received amplified signal is indicative of a presence of an object between the receiver (3) and the emitter (2), includes:
○ if said activation threshold is exceeded by a sampling value corresponding to the emission of the jth pulse of the pulse train, establishing that no objects are present between receiver (3) and emitter (2) if all the sampling values i=1 .....n-(j-1) exceed the detection threshold.

14. Method according to claim 12, wherein the step of establishing whether or not said received amplified signal is indicative of a presence of an object between the receiver (3) and the emitter (2) includes:
○ if said second threshold is exceeded by a received amplified signal corresponding to the emission of the i < jth pulse of the pulse train, establishing that no objects are present between receiver (3) and emitter (2) if all the sampling values with k = j-(i-1),.....n-(i-1) exceed the detection threshold.

15. Method according to claim 12, wherein the step of establishing whether or not said received amplified signal is indicative of a presence of an object between the receiver (3) and the emitter (2) includes:
○ if said activation threshold is exceeded by a received amplified signal corresponding to the emission of the i > jth pulse of the pulse train, not establishing that no objects are present between receiver (3) and emitter (2).

**Patentansprüche**

1. Optoelektronischer Sensor (1), der Folgendes beinhaltet:

○ Empfänger (3), angeordnet zum Empfangen elektromagnetischer Strahlung, wobei der Empfänger (3) einen Fotodetektor (5) umfasst, angeordnet zum Transformieren der empfangenen elektromagnetischen Strahlung in ein empfangenes elektrisches Signal, und eine Verstärkungsstufe (6), die eine variable Verstärkung zwischen einer minimalen Verstärkung und einer maximalen Verstärkung hat, angeordnet zum Verstärken des empfangenen elektrischen Signals;
○ Sender (2), angeordnet zum Senden einer periodischen elektromagnetischen Strahlung,
die eine Impulsfolge in jeder Periode umfasst, jede Impulsfolge n Impulse umfassend, wobei n≥2, und wobei jeder jte Impuls mit j = 1, ...,n der Folge eine Amplitude hat gleich:

$$A_j = A_{j-1} * B$$

∘ Regulierungselement (7), konfiguriert für die Regulierung der Verstärkung der Verstärkungsstufe (6) des Empfängers;

**dadurch gekennzeichnet, dass**:

B eine Ganzzahl größer 0 mit B≤D ist, wobei D = (maximale Verstärkung der Verstärkungsstufe/minimale Verstärkung der Verstärkungsstufe); und
das Regulierungselement (7) einen Regulierungsbereich hat, der in eine Anzahl n aufeinander folgender Zonen (11; 12) unterteilt ist gleich der Anzahl n der Impulse der Impulsfolge, die vom Sender (2) gesendet wird, wobei sich die erste Zone (11) auf Abstände zwischen Sender (2) und Empfänger (3) bezieht, beginnend von einem Mindestabstand, der für die Verwendung des optoelektronischen Sensors (1) möglich ist, und sich die n-te Zone (12) auf Abstände zwischen Sender (2) und Empfänger (3) bezieht, endend mit einem Maximalabstand, der für die Verwendung des optoelektronischen Sensors (1) möglich ist; wobei die Verstärkung der Verstärkungsstufe (6) durch die Auswahl eines Punktes in einer Zone (11; 12) des Regulierungsbereichs des Regulierungselements (7) ausgewählt wird; wobei der Regulierungsbereich auf eine Art und Weise produziert wird, dass in jeder Zone j #- n des Regulierungsbereichs, der einen Punkt bewegt, der im Regulierungselement (7) in der j-ten Zone in der Richtung vom Startpunkt benachbart zur (j-1)ten Zone in Richtung des Endpunkts benachbart zur (j+1)ten Zone, die entsprechende Verstärkungseinrichtung in der Verstärkungsstufe (6) von der minimalen Verstärkung, die in der Verstärkungsstufe (6) eingerichtet werden kann, zur minimalen Verstärkung, die in der Verstärkungsstufe (6) eingerichtet werden kann, multipliziert mit dem Verhältnis der Amplitude zwischen zwei aufeinander folgenden Impulsen in derselben Impulsfolge ausgewählt wird.

2. Optoelektronischer Sensor (1) nach Anspruch 1, umfassend eine Logikeinheit (10), angeordnet zur Verarbeitung des empfangenen Signals und verstärkt auf eine Art und Weise, die von der Zone (11; 12) abhängig ist, die im Impulsbereich des Regulierungselements (7) ausgewählt wird.

3. Optoelektronischer Sensor (1) nach Anspruch 2, wobei die Logikeinheit (10) konfiguriert ist, die positive Erkennung des Impulses zu etablieren, der vom Sender (2) gesendet wird, wenn - bei nach der Auswahl der jten Zone des Regulierungsbereichs - ein Signal, das diesem jten Impuls entspricht, korrekt empfangen wird.

4. Optoelektronischer Sensor (1) nach einem oder mehreren der vorstehenden Ansprüche, umfassend eine Abtasteinheit (10), angeordnet zum Abtasten einer Amplitude des empfangenen elektrischen Signals und verstärkt an n Punkten getrennt in der Zeitsequenz durch denselben Abstand, der zwischen den n Impulsen vorhanden ist, um n Abtastwerte S1...Sn zu erhalten.

5. Optoelektronischer Sensor (1) nach Anspruch 3, umfassend einen ersten Komparator (8) hinter der Abtasteinheit (10), wobei der erste Komparator (8) zum Vergleichen der n Abtastwerte mit einem Erkennungsschwellwert angeordnet ist.

6. Optoelektronischer Sensor (1) nach Anspruch 4, umfassend eine Logikeinheit (10), konfiguriert zum Bestimmen, ob die n Abtastwerte anzeigen, dass ein Objekt zwischen dem Empfänger (3) und dem Sender (2) vorhanden ist, basierend auf dem Vergleich mit dem Erkennungsschwellwert und basierend auf der Zone (11; 12), die aus den n des Regulierungsbereichs des Regulierungselements (7) ausgewählt wird.

7. Optoelektronischer Sensor (1) nach Anspruch 4 oder 5, umfassend einen zweiten Komparator hinter der Abtasteinheit, wobei der zweite Komparator zum Vergleichen eines empfangenen Signals und verstärkt auf einen Aktivierungsschwellwert, der geringer ist als der Erkennungsschwellwert, angeordnet ist, und zum Aktivieren der Abtasteinheit zum Abtasten einer Amplitude des empfangenen elektrischen Signals und verstärkt bei n Punkten angeordnet ist, wenn das empfangene und verstärkte Signal den Aktivierungsschwellwert übersteigt.

8. Verfahren zur Verarbeitung eines elektrischen Signals als eine Funktion einer elektromagnetischen Strahlung, die von einem Sender (2) eines optoelektronischen Sensors (1) gesendet wird, gefertigt nach einem oder mehreren der Ansprüche 1 bis 7, wobei das Verfahren Folgendes umfasst:

∘ Auswählen eines Punktes in der jten Zone des Regulierungsbereichs im Regulierungselement (7) auf eine Art und Weise zum Bestimmen der Verstärkung der Verstärkungsstufe;
∘ Senden der Impulsfolge vom Sender (2);
∘ Empfangen einer elektromagnetischen Strahlung vom Empfänger (3) während des Sendens der Impulsfolge;

◦ Generieren eines elektrischen Signals, das eine Funktion der empfangenen Strahlung und Verstärkung des elektrischen Signals ist;
◦ Bestimmen, ob das empfangene verstärkte Signal das Vorhandensein eines Objekts zwischen dem Empfänger (3) und dem Sender (2) anzeigt, basierend auf einer Amplitude des empfangenen Signals in mindestens einem Punkt und basierend auf dem Wert j der jten Zone, ausgewählt zwischen den n des Regulierungsbereichs des Regulierungselements (7).

9. Verfahren nach Anspruch 8, wobei der Schritt des Bestimmens, ob das empfangene Verstärkte Signal auf das Vorhandensein eines Objekts zwischen dem Empfänger (3) und dem Sender (2) hinweist, Folgendes umfasst:

◦ Bestimmen eines Erkennungsschwellwerts;
◦ wenn der Erkennungsschwellwert von einer Amplitude an einem Punkt des empfangenen und verstärkten Signals überschritten wird, das dem Senden des jten Impulses der Impulsfolge entspricht, Bestimmen, dass keine Objekte zwischen dem Empfänger (3) und Sender (2) vorhanden sind, wenn alle Amplitudenwerte des empfangenen und verstärkten Signals, das den Emissionen der Impulse i=1 ...n-j der Impulsfolge entspricht, den Erkennungsschwellwert übersteigen.

10. Verfahren nach Anspruch 8 oder 9, umfassend - nach dem Schritt des Empfangens einer elektromagnetischen Strahlung und vor dem Schritt des Bestimmens, ob das empfangene und verstärkte Signal das Vorhandensein eines Objekts anzeigt - folgenden Schritt:

◦ Abtasten einer Amplitude des empfangenen elektrischen Signals und verstärkt an n Punkten getrennt in der Zeitsequenz durch denselben Abstand, der zwischen den n Impulsen vorhanden ist, um n Abtastwerte S1...Sn zu erhalten; und
◦ Vergleichen der n Abtastwerte mit einem Erkennungsschwellwert.

11. Verfahren nach Anspruch 10, wobei der Schritt des Bestimmens, ob das empfangene verstärkte Signal auf das Vorhandensein eines Objekts zwischen dem Empfänger (3) und dem Sender (2) hinweist, den Schritt des Bestimmens umfasst, ob das empfangene Verstärkte Signal auf das Vorhandensein eines Objekts zwischen dem Empfänger (3) und dem Sender (2) hinweist, basierend auf dem Wert von j in der jten Zone, ausgewählt aus den n des Regulierungsbereichs des Regulierungselements (7).

12. Verfahren nach Anspruch 10 oder 11, umfassend folgenden Schritt:
◦ Einleiten des Schrittes des Abtastens des empfangenen verstärkten Signals an n Punkten, wenn des empfangene verstärkte Signal einen Aktivierungsschwellwert übersteigt, der geringer ist als der Erkennungsschwellwert.

13. Verfahren nach Anspruch 12, wobei der Schritt des Bestimmens, ob das empfangene Verstärkte Signal auf das Vorhandensein eines Objekts zwischen dem Empfänger (3) und dem Sender (2) hinweist, Folgendes umfasst:
◦ wenn der Aktivierungsschwellwert von einem Abtastwert überschritten wird, der dem Senden des jten Impulses der Impulsfolge entspricht, Bestimmen, dass keine Objekte zwischen dem Empfänger (3) und Sender (2) vorhanden sind, wenn alle Abtastwerte i=1.....n-(j-1) den Erkennungsschwellwert übersteigen.

14. Verfahren nach Anspruch 12, wobei der Schritt des Bestimmens, ob das empfangene Verstärkte Signal auf das Vorhandensein eines Objekts zwischen dem Empfänger (3) und dem Sender (2) hinweist, Folgendes umfasst:
◦ wenn der zweite Schwellwert von einem empfangenen verstärkten Signal überschritten wird, das dem Senden des i < jten Impulses der Impulsfolge entspricht, Bestimmen, dass keine Objekte zwischen dem Empfänger (3) und Sender (2) vorhanden sind, wenn alle Amplitudenwerte mit k = j-(i-1),.....n-(i-1) den Erkennungsschwellwert übersteigen.

15. Verfahren nach Anspruch 12, wobei der Schritt des Bestimmens, ob das empfangene Verstärkte Signal auf das Vorhandensein eines Objekts zwischen dem Empfänger (3) und dem Sender (2) hinweist, Folgendes umfasst:
◦ wenn der Aktivierungsschwellwert von einem empfangenen verstärkten Signal überschritten wird, der dem Senden des i > jten Impulses der Impulsfolge entspricht, nicht Bestimmen, dass keine Objekte zwischen dem Empfänger (3) und Sender (2) vorhanden sind.

**Revendications**

1.  Sensor optoélectronique (1) comprenant :

    ◦ un récepteur (3) disposé pour recevoir un rayonnement électromagnétique, le récepteur (3) comprenant un photodétecteur (5) disposé pour transformer le rayonnement électromagnétique reçu dans un signal électrique reçu et une étape d'amplification (6) ayant un gain variable entre un gain minimum et un gain maximum disposée pour amplifier ledit signal électrique reçu ;
    ◦ un émetteur (2) disposé pour émettre un rayonnement électromagnétique périodique comprenant un train d'impulsions dans chaque période, chaque train d'impulsions comprenant n impulsions, où n≥2, et dans lequel chaque impulsion j-ième avec j = 1, ..., n du train ayant une amplitude égale à :

$$A_j = A_{j-1} * B$$

    ◦ un élément de réglage (7) configuré pour le réglage du gain de l'étape d'amplification (6) du récepteur (3) ;

    **caractérisé en ce que** :

    B est un entier supérieur à 0 avec B≤D où D = (gain maximum de l'étape d'amplification/gain minimum de l'étape d'amplification) ; et
    l'élément de réglage (7) a une plage de réglage subdivisée en un nombre n de zones consécutives (11, 12) égal au nombre n des impulsions du train d'impulsions émis par l'émetteur (2), la première zone (11) associée aux distances entre l'émetteur (2) et le récepteur (3) partant d'une distance minimale possible pour utiliser le sensor optoélectronique (1) et la zone n-ième (12) associée aux distances entre l'émetteur (2) et le récepteur (3) terminant avec une distance maximale possible pour utiliser le sensor optoélectronique (1); ledit gain de ladite étape d'amplification (6) étant sélectionné en sélectionnant un point dans une zone (11, 12) de ladite plage de réglage de l'élément de réglage (7) ; ladite plage de réglage étant produite de sorte que, dans chaque zone j ≠ n de la plage de réglage, déplaçant un point sélectionné à l'intérieur dudit élément de réglage, (7) dans la zone j-ième dans la direction du point de départ adjacent à la zone (j-1)ième vers le point terminal adjacent à la zone (j+1)-ième, la configuration du gain correspondante dans l'étape d'amplification (6) soit déplacée du gain minimum qui peut être mis en place dans l'étape d'amplification (6) au gain minimum qui peut être mis en place dans l'étape d'amplification (6) multiplié par l'entier B égal au rapport d'amplitude entre deux impulsions consécutives dans le même train d'impulsions.

2.  Sensor optoélectronique (1) selon la revendication 1, comprenant une unité logique (10) disposée pour traiter ledit signal reçu et amplifié selon la zone (11, 12) sélectionnée dans la plage de gain de l'élément de réglage (7).

3.  Sensor optoélectronique (1) selon la revendication 2, dans lequel ladite unité logique (10) est configurée pour établir la détection positive de l'impulsion émise par l'émetteur (2) si - la zone j-ième de la plage de réglage étant sélectionnée - un signal correspondant à ladite impulsion j-ième est correctement reçu.

4.  Sensor optoélectronique (1) selon une ou plusieurs des revendications précédentes, comprenant une unité d'échantillonnage (10) disposée pour l'échantillonnage d'une amplitude dudit signal électrique reçu et amplifié au niveau de n points espacés dans une séquence temporelle de la même distance présente entre lesdites n impulsions de façon à obtenir n valeurs d'échantillonnage S1... Sn.

5.  Sensor optoélectronique (1) selon la revendication 3, comprenant un premier comparateur (8) en aval de ladite unité d'échantillonnage (10), ledit premier comparateur (8) étant disposé pour comparer lesdites n valeurs d'échantillonnage avec un seuil de détection.

6.  Sensor optoélectronique (1) selon la revendication 4, comprenant une unité logique (10) configurée pour établir si lesdites n valeurs d'échantillonnage sont une indication d'un objet étant présent entre le récepteur (3) et l'émetteur (2) sur la base de ladite comparaison avec ledit seuil de détection et selon la zone (11, 12) sélectionnée parmi n de la plage de réglage de l'élément de réglage (7).

7.  Sensor optoélectronique (1) selon la revendication 4 o 5, comprenant un deuxième comparateur en amont de ladite unité d'échantillonnage, ledit deuxième comparateur étant disposé pour comparer un signal reçu et amplifié avec un seuil d'activation, inférieur audit seuil de détection, et disposé pour activer l'unité d'échantillonnage pour l'échantillonnage d'une amplitude dudit signal électrique reçu et amplifié au niveau de n points si ledit signal reçu et amplifié dépasse ledit seuil d'activation.

8.  Procédé de traitement d'un signal électrique qui est une fonction d'un rayonnement électromagnétique émis par un émetteur (2) d'un sensor optoélectronique (1) constitué selon l'une ou plusieurs revendications 1 à 7, ledit procédé comprenant :

    ◦ sélectionner un point dans la zone j-ième de la plage de réglage dans l'élément de réglage (7) de sorte à déterminer le gain de ladite étape d'amplification ;
    ◦ émettre ledit train d'impulsions à travers ledit émetteur (2) ;
    ◦ recevoir un rayonnement électromagnétique dudit récepteur (3) pendant l'émission dudit train d'impulsions ;
    ◦ générer un signal électrique qui est une fonction dudit rayonnement reçu et amplifier le signal électrique ;
    ◦ établir si ledit signal amplifié reçu est une indication de la présence d'un objet entre le récepteur (3) et l'émetteur (2) sur la base d'une amplitude dudit signal reçu au niveau d'au moins un point et sur la base de la valeur j de la zone j-ième sélectionnée parmi n de la plage de réglage de l'élément de réglage (7).

9.  Procédé selon la revendication 8, dans lequel l'étape d'établir si ledit signal amplifié reçu est une indication de la présence d'un objet entre le récepteur (3) et l'émetteur (2) comprend :

    ◦ établir une valeur de seuil de détection ;
    ◦ si ledit seuil de détection est dépassé par une amplitude au niveau d'un point du signal reçu et amplifié correspondant à l'émission de l'impulsion j-ième du train d'impulsions, établir qu'aucun objet est présent entre le récepteur (3) et l'émetteur (2) si toutes les valeurs d'amplitude du signal reçu et amplifié correspondant aux émissions des impulsions i=1...n-j du train d'impulsions dépassent aussi le seuil de détection.

10. Procédé selon la revendication 8 ou 9, comprenant - suite à l'étape de recevoir un rayonnement électromagnétique et avant l'étape d'établir si le signal reçu et amplifié est une indication de la présence d'un objet - les étapes de :

    ◦ échantillonner une amplitude dudit signal électrique reçu et amplifié au niveau de n points espacés dans une séquence temporelle de la distance présente entre lesdites n impulsions de façon à obtenir n valeurs d'échantillonnage S1... Sn ; et
    ◦ comparer lesdites n valeurs d'échantillonnage avec un seuil de détection.

11. Procédé selon la revendication 10, dans lequel l'étape d'établir si ledit signal amplifié reçu est une indication de la présence d'un objet entre le récepteur (3) et l'émetteur (2) comprend l'étape d'établir si ledit signal amplifié reçu est une indication de la présence d'un objet entre le récepteur (3) et l'émetteur (2) sur la base de ladite comparaison avec ledit seuil de détection et sur la base de la valeur de j dans la zone j-ième sélectionnée parmi n de la plage de réglage de l'élément de réglage (7).

12. Procédé selon la revendication 10 ou 11, comprenant l'étape consistant à :
    ◦ initialiser l'étape d'échantillonner ledit signal amplifié reçu au niveau de n points quand ledit signal amplifié reçu dépasse un seuil d'activation inférieur audit seuil de détection.

13. Procédé selon la revendication 12, dans lequel l'étape d'établir si ledit signal amplifié reçu est une indication de la présence d'un objet entre le récepteur (3) et l'émetteur (2) comprend :
    ◦ si ledit seuil d'activation est dépassé par une valeur d'échantillonnage correspondant à l'émission de l'impulsion j-ième du train d'impulsions, établir qu'aucun objet est présent entre le récepteur (3) et l'émetteur (2) si toutes les valeurs d'échantillonnage i=1.....n-(j-1) dépassent le seuil de détection.

14. Procédé selon la revendication 12, dans lequel l'étape d'établir si ledit signal amplifié reçu est une indication de la présence d'un objet entre le récepteur (3) et l'émetteur (2) comprend :
    ◦ si ledit deuxième seuil est dépassé par un signal amplifié reçu correspondant à l'émission de l'impulsion i < j-ième du train d'impulsions, établir qu'aucun objet est présent entre le récepteur (3) et l'émetteur (2) si toutes les valeurs d'échantillonnage avec k = j-(i-1), .....n-(i-1) dépassent le seuil de détection.

15. Procédé selon la revendication 12, dans lequel l'étape d'établir si ledit signal amplifié reçu est une indication de la présence d'un objet entre le récepteur (3) et l'émetteur (2) comprend :

∘ si ledit seuil d'activation est dépassé par un signal amplifié reçu correspondant à l'émission de l'impulsion i > j-ième du train d'impulsions, ne pas établir qu'aucun objet est présent entre le récepteur (3) et l'émetteur (2).

EP 3 151 036 B1

FIG. 1

FIG. 2

FIG. 3

FIG. 4b

regulation of the trimmer to 270°

Minimum gain

(minimum gain)*B

Near region (First pulse)

Far region (Second pulse)

Minimum gain

Maximum gain

direction of increment of the detection distance

regulation of the trimmer to 270°

Maximum gain   Minimum gain

Near region (First pulse)

Far region (Second pulse)

Minimum gain

Maximum gain

direction of increment of the detection distance

FIG. 4a

EP 3 151 036 B1

**Receiving a "B sequence" (Near Region)**

FIG. 5

## Receiving a "B sequence" (Far Region)

Analog chain Output

First pulse

Second pulse

Reading window

comparator threshold

First comparator output

Enable of the comparator

$T_{S2}$

$T_{RW}$

FIG. 6

Peak detector output

$T_{S1}$

S1

S2

Detection threshold

Enable of the peak detector

Sync

«Far» detection

time

EP 3 151 036 B1

Receiving a "C sequence" (both Far and Near Region)

FIG. 7

EP 3 151 036 B1

**Receiving a "E sequence" (both Far and Near Region)**

FIG. 8

comparator threshold

Analog chain Output

First pulse

Second pulse

First comparator output

Enable of the comparator

$T_{s2}$

Detection threshold

Peak detector output

S1

$T_{s1}$

S2

Enable of the peak detector

Sync

Far/Near detection

time

EP 3 151 036 B1

Receiving a "B sequence" (Near Region)
Receiving an "F Sequence" (Near Regions)

comparator threshold

Analog chain Output

First pulse

Second pulse

First comparator output

Enable of the comparator

$T_{S1}$

$T_{S2}$

Peak detector output

S1

Detection threshold

S2

Enable of the peak detector

Sync

Near detection

time

FIG. 9

## Receiving an "F sequence" (Far Region)

FIG. 10

EP 3 151 036 B1

FIG. 11

EP 3 151 036 B1

31

**EP 3 151 036 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5225689 A
- US 5491548 A
- US 8842015 B